# EUROPÄISCHE PATENTANMELDUNG

(11) **EP 1 195 243 A1**
(43) Veröffentlichungstag der Anmeldung: **10.04.2002**
(21) Anmeldenummer: 00121951.8
(22) Anmeldetag: 09.10.2000
(51) Int. Cl.: B32B 17/10, C03C 27/12

(54) **Sicherheitsglas**

(71) Anmelder: Haag, Frank, 47623 Kevelaer (DE); Zibulka, Manfred, 47623 Kevelaer (DE)
(72) Erfinder: Haag, Frank, 47623 Kevelaer (DE); Zibulka, Manfred, 47623 Kevelaer (DE)
(74) Vertreter: Stenger, Watzke & Ring Patentanwälte

(57) **Zusammenfassung**

Um ein Sicherheitsglas bereitzustellen, das sämtlichen sicherheitsrelevanten Aspekten genügt und insbesondere eine hohe Splitterbindung sowie eine hohe Biegebruchfestigkeit aufweist und das zudem die Möglichkeit einer mechanischen Nachbearbeitung eröffnet, wird mit der Erfindung ein Sicherheitsglas für den Einsatz im Innen- und Außenbereich vorgeschlagen, das aus einem flächenhaften, transparenten Trägerglas sowie einer einseitig auf das Trägerglas aufgetragenen Harzschicht besteht, wobei das Trägerglas (1) und die Harzschicht (2) zur Ausbildung eines integrativen Bauelements über den gesamten Kontaktbereich fest aneinander haftend miteinander verbunden sind.

## Beschreibung

Die Erfindung betrifft ein Sicherheitsglas für den Einsatz im Innen- und Außenbereich. Zudem betrifft die Erfindung ein Sicherheitsglasverbundsystem.

Die Verwendung sowie der Einsatz von Sicherheitsgläsern sind aus dem Stand der Technik hinreichend bekannt und so ist es gängige Praxis, Sicherheitsgläser beispielsweise in der Automobilindustrie, beim Gebäudebau, zur Ausbildung von Fassaden- oder Verkleidungselementen einzusetzen.

Prinzipiell lassen sich zwei verschiedene Typen von Sicherheitsgläsern voneinander unterscheiden: Zum einen das Verbundscheibensicherheitsglas (VSG) sowie das Einscheibensicherheitsglas (ESG). Das Verbundscheibensicherheitsglas besteht aus zwei Glasscheiben, die unter Zwischenlage einer Folie miteinander verklebt sind. Der Vorteil des Verbundscheibensicherheitsglas ist darin zu sehen, daß im Falle eines Zubruchgehens die einzelnen Glassplitter an der Zwischenfolie anhaften, wodurch die Gefahr infolge unkontrolliert umherfliegender Glassplitter auf ein Minimum reduziert ist. Die Zwischenfolie dient mithin der Splitterbindung. Von Nachteil bei einem Verbundscheibensicherheitsglas ist allerdings, daß eine Nachbearbeitung aufgrund der zwischengeordneten Folie nur bedingt möglich ist. So kann es bei einer mechanischen Weiterverarbeitung, beispielsweise durch einen Säge- oder Bohrvorgang, dazu kommen, daß die Zwischenfolie auch außerhalb des Bearbeitungsbereiches beschädigt oder sogar zerstört wird. Zudem ist es von Nachteil, daß es für die Verarbeitung der mit einer Zwischenfolie versehenen Verbundscheibensicherheitsgläser spezieller Einrichtungen bedarf.

Einscheibensicherheitsgläser weisen im Unterschied zu herkömmlichen Gläsern den Vorteil auf, daß sie im Falle eines Zubruchgehens definiert splittern. Dabei sind zwei unterschiedliche Splitterformen voneinander zu unterscheiden. Zum einen kann das Einscheibensicherheitsglas derart ausgebildet sein, daß im Falle des Zubruchgehens sehr kleine Splitter entstehen, die im wesentlichen keine scharfkantigen Bereiche aufweisen. Alternativ hierzu kann das Einscheibensicherheitsglas auch derart ausgebildet sein, daß sehr großflächige Bruchstücke entstehen, welche im Unterschied zu den vorgenannten Klein-Splittern sehr viel einfacher zu handhaben sind. Zur Einstellung des vorbeschriebenen Splitterverhaltens werden Einscheibensicherheitsgläser im Rahmen der Herstellung abschließend erhitzt und abgekühlt, wodurch thermische Spannungen im Sicherheitsglas entstehen. Erfolgt die abschließende Abkühlung schockartig, so wird eine thermische Eigenspannung im Sicherheitsglas ausgebildet, die im Falle des Zubruchgehens dazu führt, daß sehr viele kleine, im wesentlichen keine scharfkantigen Bereiche aufweisende Bruchstücke entstehen. Wird hingegen die Abkühlung nicht schockartig, sondern vielmehr kontrolliert kontinuierlich durchgeführt, so entstehen im Material Eigenspannungen, die infolge eines Zubruchgehens dazu führen, daß vergleichsweise große, flächige Bruchstücke entstehen.

Ein entscheidender Nachteil bei der Verwendung von Einscheibensicherheitsgläsern besteht darin, daß diese infolge der thermischen Nachbehandlung einer Aushärtung unterliegen, was dazu führt, daß eine Nachbearbeitung, insbesondere eine mechanische Nachbearbeitung, nicht möglich ist. So können Einscheibensicherheitsgläser beispielsweise nicht mittels Schleifens mit einer Facette versehen werden. Auch ist es nicht möglich, einen nachträglichen Zuschnitt vorzusehen oder aber Durchgangsbohrungen auszubilden.

In der Praxis vielfach eingesetzt sind Verbundscheibensicherheitsgläser, die aus einzelnen Einscheibensicherheitsgläsern zusammengesetzt sind. So ist es gängige Praxis, zwei Einscheibensicherheitsgläser miteinander zu einem Verbundscheibensicherheitsglas zu kombinieren, wobei die beiden Einscheibensicherheitsgläser jeweils eine andere thermische Eigenspannung aufweisen, das eine Einscheibensicherheitsglas also schockartig und das andere der beiden Einscheibensicherheitsgläser kontinuierlich abgekühlt wurde. Durch diese Art der Kombination wird in vorteilhafter Weise erreicht, daß zwei Einscheibensicherheitsgläser miteinander zu einem Verbundglas verbunden sind, die ein jeweils anderes Bruchbild aufweisen. Gleichwohl weist ein auf diese Art und Weise ausgebildetes Verbundsicherheitsglas den Nachteil auf, nicht nachbearbeitet werden zu können. Zum einen ist infolge der thermischen Nachbehandlung der beiden Einscheibensicherheitsgläser und der damit einhergehenden Materialhärtung insbesondere eine mechanische Nachbearbeitung nicht möglich, zum anderen stellt die zwischen den beiden Einscheibensicherheitsgläsern angeordneten Zwischenfolie ein erhebliches Problem auch für eine beispielsweise thermische Nachbehandlung dar. Mithin ist eine bedarfsgerecht und an individuellen Wünschen ausgerichtete Nachbehandlung vorbekannter Sicherheitsgläser nicht möglich.

Vom Vorgenannten ausgehend liegt der Erfindung daher die **Aufgabe** zugrunde, unter Vermeidung der oben genannten Nachteile ein Sicherheitsglas bereitzustellen, das sämtlichen sicherheitsrelevanten Aspekten gerecht wird und insbesondere eine hohe Splitterbindung sowie eine hohe Biegebruchfestigkeit aufweist und das zudem die Möglichkeit insbesondere einer mechanischen Nachbehandlung eröffnet. Ferner soll mit der Erfindung ein Sicherheitsglasverbundsystem geschaffen werden.

Bezüglich des Sicherheitsglases besteht die technische **Lösung** dieser Aufgabe in einem Sicherheitsglas für den Einsatz im Innen- und Außenbereich, bestehend aus einem flächenhaften, transparenten Trägerglas sowie einer einseitig auf das Trägerglas aufgetragenen Harzschicht, wobei das Trägerglas und die Harzschicht zur Ausbildung eines integrativen Bauelements über den gesamten Kontaktbereich fest aneinander haftend miteinander verbunden sind.

Das erfindungsgemäße Sicherheitsglas besteht aus zwei Komponenten: Zum einen die Trägerglas-Komponente, zum anderen die Harzschicht-Komponente. Beide Komponenten sind zur Ausbildung eines integrativen Bauelements über den gesamten Kontaktbereich zwischen Trägerglas und Harzschicht fest aneinander haftend, d.h. einstückig miteinander verbunden. Auf diese Weise wird ein Sicherheitsglas erzeugt, das sämtlichen sicherheitsrelevanten Aspekten gerecht wird, das zugleich aber auch die Möglichkeit bietet, durch eine Nachbehandlung, insbesondere auch durch eine mechanische Nachbehandlung, individuellen Wünschen gerecht zu werden. Vorteil der festen Verbindung zwischen Trägerglas und Harzschicht ist zudem, daß angreifende Kräfte in Abhängigkeit des Belastungsfalls verteilt in das Sicherheitsglas eingeleitet werden. Auf diese Weise kann beispielsweise die an sich spröde Eigenschaft des Trägerglases durch die Harzschicht kompensierte werden.

Das erfindungsgemäße Sicherheitsglas weist hinsichtlich der sicherheitsrelevanten Aspekte den Vorteil auf, eine vergleichbar hohe Splitterbindung aufzuweisen, wie herkömmliches Verbundscheibensicherheitsglas. Die Biegebruchfestigkeit ist zudem vergleichbar hoch entsprechend der von Einscheibensicherheitsglas. Insofern steht das neu entwickelte Sicherheitsglas den bisher bekannten und weit verbreiteten Sicherheitsgläsern in nichts nach. Wesentlicher Vorteil des erfindungsgemäßen Sicherheitsglases gegenüber den herkömmlichen Sicherheitsgläsern besteht darin, daß dieses mittels mechanischer Nachbehandlungsverfahren auf einfache Weise und zudem sehr wirtschaftlich nachbearbeitet werden kann. So können die erfindungsgemäßen Sicherheitsgläser beispielsweise durch einfaches Schleifen mit Schleifkanten, Facetten oder ähnlichem versehen werden. Auch besteht die Möglichkeit, Durchgangsbohrungen auszubilden oder Zuschnitte durch einfaches mechanisches Sägen oder herkömmliches Schneiden zu erzeugen. Individuelle Kundenwünsche bzw. bedarfsgerechte Anpassungen können so auf einfache Weise vorgenommen werden.

Gemäß einem Merkmal der Erfindung ist das Trägerglas Float-Glas. Der Vorteil bei der Verwendung von Float-Glas liegt darin begründet, daß es sich auf einfache Weise und unter Verwendung von herkömmlichen Werkzeugen, die auch für die Fliesen- und Glasbearbeitung eingesetzt werden, verarbeiten läßt. So können auf einfache und preiswerte Weise Zuschnitte, Bohrungen, Abrundungen oder ähnliche Verarbeitungsmaßnahmen leicht und präzise durchgeführt werden. Die zur Ausbildung des Sicherheitsglases auf das Float-Glas aufgetragene Harzschicht steht einer derartigen Verarbeitung nicht im Wege, so daß auch das Sicherheitsglas nach seiner Fertigstellung auf einfache Weise verarbeitet werden kann. Gemäß einer alternativen Ausgestaltungsform der Erfindung ist vorgesehen, daß das Trägerglas Ornamentglas ist. Gemäß einem weiteren Vorschlag der Erfindung ist vorgesehen, daß das Sicherheitsglas Wärmeschutz-Glas und/oder Sonnenschutz-Glas ist. Dabei kann das erfindungsgemäße Sicherheitsglas in vorteilhafter Weise sowohl mit harten, halbharten als auch mit weichen Schichten ausgebildet werden.

Gemäß einem weiteren Merkmal der Erfindung weist das Trägerglas eine Stärke von 2 mm bis 12 mm, vorzugsweise von 4 mm bis 10 mm auf. Je nach Verwendungszweck sind hierbei die entsprechenden Trägerglasstärken auszuwählen.

Gemäß einem weiteren Merkmal der Erfindung ist die auf das Trägerglas aufgetragene Harzschicht transparent ausgebildet. Alternativ hierzu kann auch vorgesehen sein, daß die Harzschicht farbig, beispielsweise uni oder mit Metalliceffekten versehen, ausgebildet ist. Vorzugsweise ist die Harzschicht aus einem Polyurethan-Harz gebildet. Diese eröffnet die Möglichkeit einer besonders guten mechanischen Nachbearbeitung.

Gemäß einem weiteren Merkmal der Erfindung ist die Harzschicht auf der dem Trägerglas abgewandten Seite mit einer aus einem Dekormedium gebildeten Dekorbeschichtung versehen. Diese Art der Ausgestaltung des erfindungsgemäßen Sicherheitsglases ermöglicht in besonders vorteilhafter Weise die Nachahmung beliebiger Oberflächen. Im Unterschied zu den vorbekannten Sicherheitsgläsern ist das erfindungsgemäße Sicherheitsglas mithin auch dazu geeignet, als Dekorelement eingesetzt zu werden. Hierdurch wird insbesondere der Vorteil erzielt, daß in einem Bauelement sowohl sicherheitsrelevante als auch ästhetische, dekorgebende Aspekte miteinander kombiniert sind. Mithin wird durch das erfindungsgemäße Sicherheitsglas erstmals die Möglichkeit eröffnet, Dekorelemente bereitzustellen, die auch den vorgenannten sicherheitsrelevanten Aspekten genügen. So können nunmehr auch Fliesenelemente, Fassaden- oder Verkleidungselemente sowie Abdeckelemente oder dergleichen aus Sicherheitsglas hergestellt werden.

Der Phantasie sind bei der Ausbildung der Dekorbeschichtung keinerlei Grenzen gesetzt. So kann beispielsweise als das die Dekorbeschichtung bildende Dekormedium ein Druckträger vorgesehen sein. Gemäß einem Merkmal der Erfindung ist vorgesehen, daß der Druckträger ein bedrucktes Papier, Seidengewebe oder Vliesgewebe ist, welches mit der bildaufweisenden Seite dem Trägerglas zugewandt ist. Dieser Druckträger wird auf einfache Weise auf die Harzschicht des Sicherheitsglases aufgetragen und erlaubt die Nachahmung beliebiger Oberflächen. Alternativ zum Druckträger kann gemäß einem weiteren Merkmal der Erfindung auch vorgesehen sein, daß als Dekormedium ein Druckmittel vorgesehen ist, das direkt dekorgebend auf die Harzschicht aufgetragen ist. Auch diese alternative Ausgestaltung der Dekorbeschichtung ermöglicht es, auf verblüffend einfache Weise und zum Verwechseln ähnlich beliebige Oberflächen nachzuahmen. So können beispielsweise die Oberflächen von hochwertigen Naturstoffen, wie beispielsweise Marmor oder Granit, nachgebildet werden. Auf diese Weise entsteht ein aus Sicherheitsglas gebildetes Bauelement, das aus herkömmlichen Werkstoffen, wie beispielsweise Marmor oder Granit, bestehende Bauelemente adäquat zu ersetzen vermag, die jedoch in vorteilhafter Weise kostengünstiger herstellbar und auch leichter zu verarbeiten sind. Vor allem aber genügen diese erfindungsgemäßen Bauelemente auch den vorgenannten sicherheitsrelevanten Aspekten.

Von besonderem Vorteil ist ferner, daß ein aus Sicherheitsglas gebildetes Dekorelement unempfindlich gegenüber Umwelteinflüssen ist. Auch kann es auf einfach denkbare Weise in sauberem Zustand gehalten werden. Mit der Verwendung von Sicherheitsglas wird in vorteilhafter Weise sichergestellt, daß für den Fall, daß ein dekorgebendes Element ungewollt, beispielsweise durch Schlageinwirkung, zerstört wird, keine direkte Gefahr vom zerstörten dekorgebenden Element ausgeht. Darüber hinaus ist das Verletzungsrisiko für das verarbeitende Personal sowie im Gebrauchszustand auch für die Allgemeinheit deutlich verringert. Somit ergibt sich insgesamt ein dekorgebendes Element, das als Bauelement beispielsweise für eine Fassadenverkleidung eingesetzt werden kann, das nicht nur täuschend ähnlich ein beliebiges Naturmaterial oder eine andere beliebige Abbildung wiedergeben kann, auch ist ein solches Bauelement gegenüber äußeren Umwelteinflüssen sehr viel unempfindlicher und mit weitaus weniger Aufwand zu pflegen.

Gemäß einem weiteren Merkmal der Erfindung kann das Trägerglas vorderseitig und/oder rückseitig mit einer Strukturierung versehen sein. Eine solche Strukturierung dient der Erzeugung dreidimensionaler Effekte und kann beispielsweise dazu eingesetzt werden, das Erscheinungsbild einer durch die Dekorbeschichtung nachgeahmten Oberfläche eines Oberflächenbaustoffs noch realistischer erscheinen zu lassen. So kann für die Nachahmung eines Baustoffes, welcher gewöhnlich eine glänzende, glatte Oberfläche aufweist, das Trägerglas gleichfalls mit einer entsprechenden glatten, glänzenden Oberfläche ausgestattet sein. Soll hingegen die Oberfläche eines Baustoffs nachgeahmt werden, der eine bestimmte Struktur aufweist oder ein mattes Erscheinungsbild darstellt, so kann das Trägerglas mattiert bzw. mit einer entsprechenden Struktur versehen sein. Diese Maßnahme läßt die Nachbildung noch sehr viel realistischer erscheinen. Hierbei gilt es zu berücksichtigen, daß eine solche Ausbildung des Trägerglases nur deswegen überhaupt möglich wird, weil erfindungsgemäßes Sicherheitsglas eingesetzt wird, denn ist eine solche Nachbearbeitung, wie oben bereits dargelegt, bei herkömmlichen Sicherheitsgläsern nicht möglich.

Gemäß einem weiteren Merkmal der Erfindung wird auf die Rückseite der Dekorbeschichtung eine weitere Materialschicht aufgebracht. Diese Materialschicht kann lichtdicht und/oder transluszent ausgebildet sein. Auch kann diese weitere Materialschicht gemäß einem weiteren Vorschlag der Erfindung als mineralische Haftbrücke ausgebildet sein. Eine derartige Haftbrücke dient dazu, erfindungsgemäßes Sicherheitsglas zusammen mit herkömmlichen Befestigungsmitteln, wie beispielsweise Klebstoffen, zu verarbeiten und am Verwendungsort positionsgenau anzuordnen und zu fixieren. Hierbei kann gemäß einem besonderen Merkmal der Erfindung vorgesehen sein, daß die mineralische Haftbrücke aus Quarzsand besteht. Dies ermöglicht die Verarbeitung des erfindungsgemäßen Sicherheitsglases mit herkömmlichen Fliesenklebern oder Mörtel.

Gemäß einem weiteren Merkmal der Erfindung wird vorgeschlagen, daß zwischen der Dekorbeschichtung und der weiteren Materialschicht eine zusätzliche Harzschicht und/oder Klebstoffschicht vorgesehen ist. Diese dient in erster Linie dazu, einen festen Verbund zwischen der weiteren Materialschicht und der Dekorbeschichtung auszubilden. Auf diese Weise wird ein kompakter Werkstoffverbund ausgebildet, der leicht zu handhaben und paßgenau für den jeweiligen Verwendungszweck verarbeitet, d. h. zugeschnitten werden kann. Je nach Verwendungszweck des Sicherheitsglases sind Beispiele für die weitere Materialschicht: Fasermaterial, extrudiertes Polystyrol oder Dämmaterial.

Bezüglich des Sicherheitsglasverbundsystems wird zur **Lösung** der Aufgabe ein System vorgeschlagen, welches gekennzeichnet ist durch miteinander nach dem Baukastenprinzip kombinierte Sicherheitsgläser, wobei zwei Sicherheitsgläser jeweils rückseitig einander zugewandt einstückig miteinander verbunden sind.

Der Kerngedanke des vorgeschlagenen Sicherheitsglasverbundsystems besteht mithin darin, Sicherheitsgläser nach dem Baukastenprinzip miteinander zu kombinieren und hierdurch unterschiedliche Materialschichten auszubilden. Die Sicherheitsgläser werden hierbei rückseitig aneinander zugewandt miteinander verbunden. Auf diese Weise lassen sich Sicherheitsglas-Bauelemente erzeugen, die beidseitig eine Dekorbeschichtung oder eine Uni-Beschichtung oder eine Metallic-Beschichtung oder eine transparente Beschichtung aufweisen. Vorzugsweise sind hierbei die einzelnen Sicherheitsgläser einstückig miteinander verbunden, so daß ein ungewolltes Verrutschen bzw. Ablösen wirkungsvoll unterbunden ist. Gemäß einem weiteren Vorschlag der Erfindung werden zwei Sicherheitsgläser unter Zwischenordnung einer weiteren, zusätzlichen Materialschicht miteinander verbunden. Vorgesehen sein kann hier beispielsweise ein aus Dämmstoffmaterial gebildeter Dämmstoffkern. Das so ausgebildete Bauelement kann universell eingesetzt und beispielsweise direkt als Trennwand-, Tür- oder Raumteilermaterial eingesetzt werden. Auch die Verwendung einer Zwischenfolie als zusätzliche Materialschicht ist denkbar.

Gemäß einem weiteren Merkmal der Erfindung sind die beiden ein Sicherheitsglas-Bauelement bildenden Sicherheitsgläser beanstandet voneinander angeordnet, wobei der Zwischenraum luft- und/oder gasgefüllt ist. Auf diese Weise wird ein wärmegedämmtes, wie auch schallisoliertes Element ausgebildet, das vielseitig einsetzbar ist.

Insgesamt wird mit der Erfindung ein Sicherheitsglas vorgeschlagen, dessen wesentlicher Vorteil darin besteht, sämtlichen sicherheitsrelevanten Aspekten gerecht zu werden und zudem die Möglichkeit der Nachbearbeitung, insbesondere der mechanischen Nachbearbeitung, zu eröffnen. So können die erfindungsgemäßen Sicherheitsgläser im Anschluß an ihre Herstellung durch Schleifen, Sägen, Bohren oder dergleichen nachgearbeitet werden, was die Möglichkeit eröffnet, individuelle und bedarfsgerechte Kundenwünsche zu berücksichtigen. Ferner besteht die Möglichkeit der Ausgestaltung dekorgebender Bauelemente. So kann auf einfache Weise eine dekorgebende Schicht rückseitig auf die Harzschicht des Sicherheitsglases aufgetragen werden, so daß bei einer vorderseitigen Betrachtung des Sicherheitsglases der Eindruck entsteht, als wäre hier nicht Glas, sondern vielmehr der gemäß dekorgebender Schicht nachgeahmte Baustoff eingesetzt.

Das erfindungsgemäße Sicherheitsglas erfüllt in vorteilhafter Weise die an ein Sicherheitsglas anzulegenden Prüfkriterien, insbesondere besitzt das erfindungsgemäße Sicherheitsglas eine hohe Splitterbindung wie auch eine hohe Biegebruchfestigkeit.

Ein weiterer Vorteil des erfindungsgemäßen Sicherheitsglases ist in der Möglichkeit der Oberflächenbehandlung begründet. So kann im Sinne einer Vor- oder Nachbehandlung die Oberfläche des Sicherheitsglases beispielsweise durch Ätzverfahren bearbeitet und gestaltet werden, ohne daß hierdurch die vorgenannten sicherheitsrelevanten Aspekte beeinträchtigt werden.

Die Möglichkeit der Nachbearbeitung eröffnet zudem den Vorteil, daß das Sicherheitsglas als Bauelement, beispielsweise als Fassaden- oder Verkleidungselement eingesetzt werden kann. So kann beispielsweise zur Herstellung eines erfindungsgemäßen Sicherheitsglas-Bauelements ein mit einem Bild oder einer nachahmenden Struktur ausgebildeter Druckträger auf die Harzschicht des Sicherheitsglases in der Weise aufgetragen werden, daß die bildaufweisende Seite des Druckträgers dem Trägerglas zugewandt ist. Als besonders preisgünstiges Ausgangsmaterial für den Druckträger bei gleichzeitig vergleichsweise guter Wiedergabe eines auf ihm abgedruckten Bildes oder einer auf ihm abgedruckten Struktur wird in vorteilhafter Weise Papier vorgeschlagen. Auch ist es denkbar, als Druckträger Photographien, bemalte Druckträger oder dergleichen zu verwenden. Im Falle eines bedruckten Druckträgers kann die auf dem Druckträger abgebildete Struktur in digitaler Weise von einem Vorbild erfaßt worden sein. So ist es beispielsweise möglich, die Oberfläche von natürlichen Baustoffen direkt durch Einscannen zu digitalisieren und dann mittels elektronischer Datenverarbeitung Ausdrucke von dem digitalisierten Abbild der Oberfläche zu erzeugen. Auch kann die Bildaufnahme in anderer Weise, beispielsweise mittels einer Digitalkamera, mittels konventioneller Photoapparate oder ähnlichem erfolgen. Entscheidend ist, daß der Druckträger dazu geeignet ist, jedweder Struktur oder jedweder sonstige Abbildung auf einfache Weise wiederzugeben und so ein flächenhaftes Sicherheitsglas-Bauelement zu schaffen, das aufgrund seiner täuschend echten Nachahmung als Ersatz für sehr viel teurere Werkstoffe eingesetzt werden kann.

Zur Ausbildung einer dauerhaften, festen Verbindung zwischen Trägerglas und Druckträger wird mit der Erfindung vorgeschlagen, daß der Druckträger mit der bildaufweisenden Seite dem Trägerglas zugewandt auf die noch nicht ausgehärtete Harzschicht aufgesetzt wird. Die Harzschicht ist hierbei vorzugsweise transparent ausgebildet. Nach Aushärten des Harzes ist sodann eine feste Verbindung zwischen Trägerglas und Druckträger ausgebildet. Zur weiteren Sicherung des Druckträgers gegenüber äußeren Einflüssen kann ferner eine weitere Harzabdeckung vorgesehen sein, die auf die Rückseite des Druckträgers aufgebracht wird. Diese muß nicht in notwendiger Weise transparent sein, sondern kann beispielsweise eingefärbt sein, um zusätzlich zum optischen Erscheinungsbild des erfindungsgemäßen Sicherheitsglas-Bauelements beizutragen.

Das auf die vorgenannte Weise ausgebildete Sicherheitsglas-Bauelement kann mechanisch weiterverarbeitet werden. Dies eröffnet die Möglichkeit, Bauelemente bedarfsgerecht zuzuschneiden, mit Durchgangsbohrungen zu versehen oder mittels Schleifen Facetten auszubilden. Auch kann die Oberflächenstruktur durch entsprechende Verarbeitungsverfahren nachgearbeitet oder mit zusätzlichen Verzierungen versehen werden. Auch ermöglicht die Nachbearbeitung des erfindungsgemäßen Sicherheitsglases die Ausbildung von Sicherheitsglasverbundsystemen. Auf diese Weise können spezielle Anforderungen, wie beispielsweise an Lärm-, Sicht- oder Dämmschutz, erfüllt werden.

Weitere Merkmale und Vorteile der Erfindung ergeben sich aus der nachfolgenden Beschreibung anhand der zugehörigen Zeichnung. Dabei zeigen:
- Fig. 1: in einer schematischen Seitenansicht ein erfindungsgemäßes Sicherheitsglas gemäß einer ersten Ausführungsform;
- Fig. 2: in einer schematischen Seitenansicht ein erfindungsgemäßes Sicherheitsglas gemäß einer zweiten Ausführungsform;
- Fig. 3: in einer schematischen Seitenansicht ein erfindungsgemäßes Sicherheitsglas gemäß einer dritten Ausführungsform;
- Fig. 4: in einer schematischen Seitenansicht ein erfindungsgemäßes Sicherheitsglas gemäß einer vierten Ausführungsform;
- Fig. 5: in einer schematischen Seitenansicht ein aus zwei Sicherheitsgläsern zusammengesetztes Sicherheitsglas-Bauelement gemäß einer ersten Ausführungsform;
- Fig. 6: in einer schematischen Seitenansicht ein aus zwei Sicherheitsgläsern zusammengesetztes Sicherheitsglas-Bauelement gemäß einer zweiten Ausführungsform und
- Fig. 7: in einer schematischen Seitenansicht ein aus zwei Sicherheitsgläsern zusammengesetztes Sicherheitsglas-Bauelement gemäß einer dritten Ausführungsform.

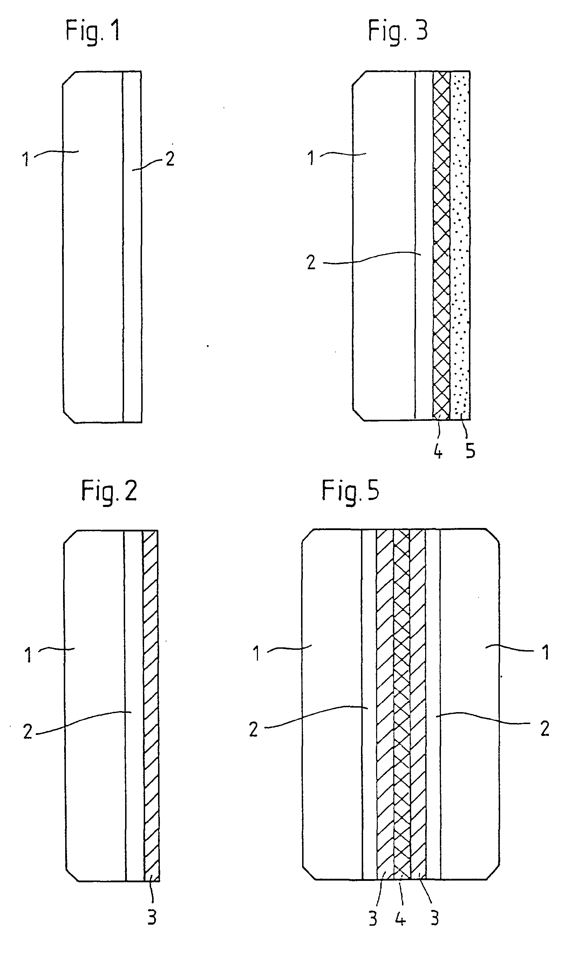

Die Fign. 1 bis einschließlich 4 zeigen in einer schematischen Seitenansicht jeweils den Aufbau eines erfindungsgemäßen Sicherheitsglases. Die Fign. 5, 6 und 7 zeigen jeweils ein aus zwei Sicherheitsgläsern zusammengesetztes Sicherheitsglas-Bauelement. Die Abbildungen dienen ausschließlich der Veranschaulichung und sind nicht maßstabsgetreu.

Das in Fig. 1 dargestellte flächenhafte Sicherheitsglas besteht aus zwei unterschiedlichen Materialschichten und ist fliesenförmig ausgebildet. Es weist ein transparent ausgebildetes Trägerglas 1 auf, welches gemäß einem vorteilhaften Vorschlag der Erfindung aus Float-Glas oder Ornamentglas gebildet ist. Auf das Trägerglas 1 ist rückseitig eine Harzschicht 2 aufgebracht. Diese Harzschicht ist gemäß einem vorteilhaften Vorschlag der Erfindung transparent ausgebildet. Trägerglas 1 und Harzschicht 2 sind einstückig miteinander verbunden und bilden zusammen das erfindungsgemäße Sicherheitsglas.

Das erfindungsgemäß ausgebildete Sicherheitsglas eröffnet in vorteilhafter Weise die Möglichkeit einer auch mechanischen Nachbearbeitung. So können beispielsweise mittels Facettenschliff Kanten nachgearbeitet, beispielsweise abgeschrägt oder abgerundet werden. Zudem besteht die Möglichkeit, das Sicherheitsglas bedarfsgerecht zuzuschneiden. Trotz der vorgenannten Möglichkeit der mechanischen Nachbearbeitung erfüllt das erfindungsgemäße Sicherheitsglas sämtliche sicherheitsrelevante Aspekte und weist eine hohe Splitterbildung wie auch eine hohe Biegebruchfestigkeit auf.

Gemäß einer ersten alternativen Ausführungsform kann die Harzschicht zweifarbig und direkt dekorgebend auf das Trägerglas 1 aufgebracht sein. Alternativ hierzu kann auch vorgesehen sein, daß die Harzschicht 2 transparent ausgebildet ist und nach einem Auftragen auf das Trägerglas 1 entsprechend dekorgebend bedruckt wird. Als Druckmittel eignet sich beispielsweise Acrylatfarbe.

Mit dem erfindungsgemäßen Sicherheitsglas können auf verblüffend einfache Weise und täuschend echt teure Naturmaterialien, wie z. B. Marmor oder Granit, nachgeahmt werden. Zu diesem Zweck wird das Trägerglas 1 entweder direkt dekorgebend mit einer Harzschicht 2 beschichtet oder eine transparent ausgebildete Harzschicht nach einem Aushärten bedruckt. In jedem Fall sind der Phantasie keine Grenzen gesetzt und es können alle nur denkbaren Dekore, Strukturen, Abbildungen oder dergleichen auf das Trägerglas 1 aufgetragen werden. Zudem besteht auch die Möglichkeit metallische Effekte auszubilden.

Gemäß einem weiteren vorteilhaften Merkmal kann vorgesehen sein, daß in die Harzschicht 2 technische Funktionsträger mit eingebracht werden. Dies können beispielsweise magnetisierbare Teilchen sein, wie auch Verstärkungsdrähte, elektrische Leiter oder Sensoren. Auf diese Weise kann das erfindungsgemäße Sicherheitsglas mit zusätzlichem technischen Features ausgerüstet werden, die es ermöglichen, das Sicherheitsglas funktionsorientiert bedarfsgerecht einzusetzen. So kann beispielsweise in die Harzschicht eine Heizwendel eingebracht werden, die im Bedarfsfall, beispielsweise bei beschlagener Scheibe, erwärmt wird, so daß der sich auf der Vorderseite des Sicherheitsglas befindliche Niederschlagnebel verdunstet und eine freie Sicht wieder hergestellt wird. Als weiteres technisches Feature wäre auch denkbar, Sensoren in die Harzschicht mit einzubringen, die als Erkennungsdetektoren beispielsweise auf optische oder elektrische Signale ansprechen. Auch können stromerzeugende Bauteile in die Harzschicht mit eingebunden werden, so daß das erfindungsgemäße Sicherheitsglas zugleich auch als Fotovoltaik-Element Verwendung finden kann, was sich insbesondere dann anbietet, wenn das Sicherheitsglas als Fassadenaußenelement eines Gebäudes eingesetzt wird.

Fig. 2 zeigt in einer zweiten Ausführungsform ein Sicherheitsglas, welches über eine zusätzliche, lichtdichte Materialschicht 3 verfügt. Diese Materialschicht 3 ist rückseitig auf die Harzschicht 2 aufgebracht. Bei dieser lichtdichten Materialschicht kann es sich gleichfalls um eine Harzschicht handeln, die im Gegensatz zur Harzschicht 2 lichtdicht ausgeführt ist. Alternativ hierzu kann auch vorgesehen sein, daß die Materialschicht 3 transluszent ausgebildet ist. Derartig ausgebildete Sicherheitsgläser eignen sich insbesondere als Bauelementen in Form von Bekleidungsplatten für sämtliche Bereiche im gewerblichen und privaten Innenausbau, Laden- und Messebau, Fahrzeugbau, Schiffsbau, in der Fabrikation von Möbeln oder dergleichen. Die Verarbeitung kann mit normalen Werkzeuge der Glasbearbeitung vorgenommen werden.

Fig. 3 zeigt in einer weiteren Ausgestaltungsform um eine weiteren Materialschicht 5 ergänztes Sicherheitsglas. Bei dieser weiteren Materialschicht 5 handelt es sich um eine aus Quarzsand gebildete Haftbrücke. Diese dient der einfachen Verarbeitung des erfindungsgemäßen Sicherheitsglases und so können für eine Verlegung bzw. Verarbeitung herkömmliche Haftmittel, wie z. B. Fliesenkleber oder Mörtel, verwendet werden. Einsatzgebiet eines derart ausgebildeten Sicherheitsglases sind beispielsweise Wand- oder Fassadenverkleidungen, Balkonverkleidungen oder die Verwendung als Fensterbank. Zur festen Verbindung des Sicherheitsglases und der weiteren Materialschicht 5 ist eine Klebschicht 4 vorgesehen, die zwischen der Harzschicht 2 und der weiteren Materialschicht 5 angeordnet ist. Zur Ausbildung einer Klebschicht 4 kann entweder ein entsprechender Klebstoff oder eine Harzschicht verwendet werden. Für den Fall, daß als Klebstoffschicht 4 Harz eingesetzt wird, kann dieses nach einem Aushärten der Harzschicht 2 rückseitig auf das Sicherheitsglas aufgetragen und direkt nach dem Aufbringen mit Quarzsand bestreut werden. Nach einem Aushärten des Harzes ist der Quarzsand sodann als Anschlußschicht fest mit dem Sicherheitsglas verbunden. Alternativ hierzu kann anstelle einer mineralischen Haftbrücke als weitere Materialschicht 5 auch andersartiges Material eingesetzt werden. So kann je nach Verwendungszweck des Sicherheitsglases die weitere Materialschicht 5 aus Perlconboard 5a aus extrudiertem Polystyrol 5b oder aus wabenartigem Fasermaterial 5c gebildet sein, wobei derartige Materialien insbesondere dem Dämm- und Isolierschutz dienen. Den Aufbau eines solchen Sicherheitsglases zeigt Fig. 4.

Die in den Fign. 1 bis 4 dargestellten Ausführungsbeispiele weisen eine fliesenförmige, d. h. rechteckförmige Grundfläche auf. Diese kann nach Belieben zugeschnitten werden und beispielsweise auch dreieckförmige, ovale oder kreisförmige Formen annehmen. Zudem können die Sicherheitsgläser auch gekrümmt ausgebildet werden, d. h. sowohl konvex als auch konkav geformt sein. Im Hinblick auf das in Fig. 1 dargestellt, sogenannte Mono-Sicherheitsglas ist dies insbesondere für die Anwendung im Bereich des Fassadenbaus von Interesse.

Mit der vorliegenden Erfindung wird insgesamt ein Sicherheitsglas für den Einsatz im Innen- und Außenbereich vorgeschlagen, welches kostengünstig und einfach auch im großindustriellen Maßstab herstellbar ist und aus dem sich eine Vielzahl gestalterischer Möglichkeiten ergeben. So eignet sich das erfindungsgemäße Sicherheitsglas auch besonders hervorragend zur einfachen, kostengünstigen und schnellen nachträglichen Ausgestaltung von Räumlichkeiten. Von besonderem Vorteil ist dabei, daß das Trägerglas 1 aus Float-Glas gebildet ist, welches auf besonders einfache Weise nacharbeitbar ist.

Das erfindungsgemäße Sicherheitsglas verfügt zudem aufgrund der mit dem Trägerglas 1 einstückig verbundenen Harzschicht 2 über eine hohe Splitterbindung und eine hohe Biegebruchfestigkeit. Zudem entstehen im Falle eines ungewollten Zubruchgehens keine scharfkantigen Bruchstücke, so daß auch im Falle des Zubruchgehens das Verletzungsrisiko minimiert ist.

Die Fign. 5, 6 und 7 zeigen jeweils ein aus Sicherheitsgläsern zusammengesetztes Sicherheitsglas-Bauelement. Hierbei können die einzelnen Sicherheitsgläser nach dem Baukastenprinzip miteinander kombiniert werden, so daß je nach Anwendungsgebiet ein entsprechendes Sicherheitsglas-Bauelement zur Verfügung gestellt werden kann.

Fig. 5 zeig ein Sicherheitsglas-Bauelement, das aus zwei Sicherheitsgläsern gemäß Fig. 2 zusammengesetzt ist. Die beiden Sicherheitsgläser sind rückseitig einander zugewandt unter Verwendung einer Klebschicht 4 miteinander verbunden. Zur Ausbildung der Klebschicht kann entweder entsprechender Klebstoff oder Harz verwendet werden. Zudem kann als Zwischenelement zwischen den beiden Sicherheitsgläsern eine Folie vorgesehen sein. Auf diese Weise wird ein Sicherheitsglasverbund ausgebildet. Das in Fig. 5 dargestellte Sicherheitsglas-Bauelement weist beidseitig eine dekorgebende Harzschicht 2 auf und eignet sich somit beispielsweise zum Aufbau einer Trennwand.

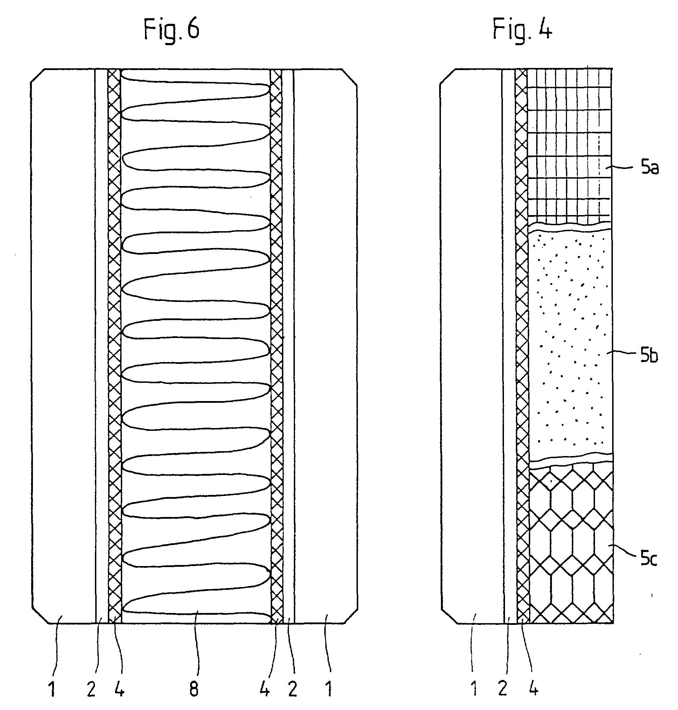

Fig. 6 zeigt eine Ausführungsform, bei der zwei Sicherheitsgläser gemäß Fig. 1 unter Zwischenordnung eines Dämmstoffkerns 8 miteinander verbunden sind. Für eine feste Verbindung der Sicherheitsgläser mit dem Dämmstoffkern 8 sind beidseitig des Dämmstoffkerns 8 Klebschichten 4 vorgesehen.

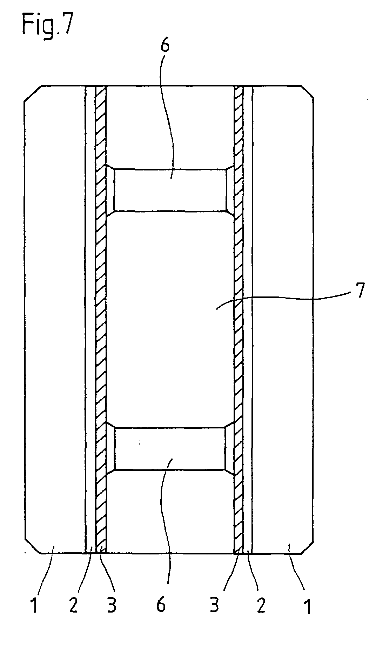

Fig. 7 zeigt schließlich eine Ausführungsform, bei der unter Verwendung von Abstandshaltern 6 zwei Sicherheitsgläser gemäß Fig. 2 beabstandet voneinander angeordnet sind. Der sich zwischen den Sicherheitsgläsern ausbildende Zwischenraum 7 ist mit Gas oder Luft befüllt. Auch kann der Zwischenraum 7 evakuiert sein.

### Bezugszeichenliste

- 1: Trägerglas
- 2: Harzschicht
- 3: lichtdichte Materialschicht
- 4: Klebschicht
- 5: weitere Materialschicht
- 5a: Perlconboard
- 5b: extrudiertes Polystyrol
- 5c: wabenartiges Fasermaterial
- 6: Abstandshalter
- 7: Zwischenraum
- 8: Dämmstoffkern

## Patentansprüche

1. Sicherheitsglas für den Einsatz im Innen- und Außenbereich, bestehend aus einem flächenhaften, transparenten Trägerglas sowie einer einseitig auf das Trägerglas aufgetragenen Harzschicht, wobei das Trägerglas und die Harzschicht zur Ausbildung eines integrativen Bauelements über den gesamten Kontaktbereich fest aneinander haftend miteinander verbunden sind.

2. Sicherheitsglas nach Anspruch 1, **dadurch gekennzeichnet, daß** das Trägerglas Float-Glas ist.

3. Sicherheitsglas nach Anspruch 1, **dadurch gekennzeichnet, daß** das Trägerglas Ornamentglas ist.

4. Sicherheitsglas nach Anspruch 1, **dadurch gekennzeichnet, daß** das Trägerglas Einscheibensicherheitsglas (ESG) oder teilvorgespanntes Glas ist.

5. Sicherheitsglas nach einem der Ansprüche 1 bis 4, **dadurch gekennzeichnet, daß** das Trägerglas Wärmeschutz-Glas und/oder Sonnenschutz-Glas ist.

6. Sicherheitsglas nach einem der Ansprüche 1 bis 5, **dadurch gekennzeichnet, daß** das Trägerglas eine Stärke von 2 mm bis 12 mm, vorzugsweise von 4 mm bis 10 mm aufweist.

7. Sicherheitsglas nach einem der Ansprüche 1 bis 6, **dadurch gekennzeichnet, daß** die Harzschicht transparent ausgebildet ist.

8. Sicherheitsglas nach einem der Ansprüche 1 bis 7, **dadurch gekennzeichnet, daß** die Harzschicht aus PU-Harz gebildet ist.

9. Sicherheitsglas nach einem der vorhergehenden Ansprüche, **dadurch gekennzeichnet, daß** die Harzschicht auf der der Trägerglas abgewandten Seite mit einer aus einem Dekormedium gebildeten Dekorbeschichtung versehen ist.

10. Sicherheitsglas nach Anspruch 9, **dadurch gekennzeichnet, daß** als Dekormedium ein Druckträger vorgesehen ist.

11. Sicherheitsglas nach Anspruch 10, **dadurch gekennzeichnet, daß** der Druckträger ein bedrucktes Papier, Seidengewebe oder Vliesgewebe ist, welches mit der bildaufweisenden Seite dem Trägerglas zugewandt ist.

12. Sicherheitsglas nach Anspruch 9, **dadurch gekennzeichnet, daß** als Dekormedium ein Druckmittel vorgesehen ist, das direkt dekorgebend auf die Harzschicht aufgetragen ist.

13. Sicherheitsglas nach Anspruch 12, **dadurch gekennzeichnet, daß** als Druckmittel Acrylatfarbe oder Polyurethanfarbe vorgesehen ist.

14. Sicherheitsglas nach einem der Ansprüche 9 bis 13, **dadurch gekennzeichnet, daß** auf die Rückseite der Dekorbeschichtung eine weitere Materialschicht aufgebracht ist.

15. Sicherheitsglas nach Anspruch 14, **dadurch gekennzeichnet, daß** die weitere Materialschicht lichtdicht ausgebildet ist.

16. Sicherheitsglas nach einem der Ansprüche 14 bis 15, **dadurch gekennzeichnet, daß** die weitere Materialschicht als mineralische Haftbrücke ausgebildet ist.

17. Sicherheitsglas nach einem der Ansprüche 9 bis 16, **dadurch gekennzeichnet, daß** zwischen der Dekorbeschichtung und der weiteren Materialschicht eine zweite Harzschichtung und/oder Klebstoffschicht vorgesehen ist.

18. Sicherheitsglas nach einem der vorhergehenden Ansprüche, **dadurch gekennzeichnet, daß** die erste und/oder zweite Harzschicht als Bindemittel für Zusatzstoffe ausgebildet ist.

19. Sicherheitsglasverbundsystem, **gekennzeichnet durch** miteinander nach dem Baukastenprinzip kombinierte Sicherheitsgläser gemäß einem der Ansprüche 1 bis 18, wobei zwei Sicherheitsgläser jeweils rückseitig zugewandt einstückig miteinander verbunden sind.

20. Sicherheitsglasverbundsystem nach Anspruch 19, **dadurch gekennzeichnet, daß** die Sicherheitsgläser miteinander verklebt sind.

21. Sicherheitsglasverbundsystem nach einem der Ansprüche 19 oder 20, **dadurch gekennzeichnet, daß** zwischen den Sicherheitsgläsern ein Dämmstoffkern angeordnet ist.

22. Sicherheitsglasverbundsystem nach einem der Ansprüche 19 oder 20, **dadurch gekennzeichnet, daß** die Sicherheitsgläser beabstandet voneinander angeordnet sind, wobei der Zwischenraum luft- und/oder gasbefüllt ist.
